# EUROPÄISCHE PATENTSCHRIFT

(11) **EP 1 171 529 B1**
(45) Veröffentlichungstag und Bekanntmachung des Hinweises auf die Patenterteilung: **23.07.2003**
(21) Anmeldenummer: 00920513.9
(22) Anmeldetag: 18.03.2000
(51) Int. Cl.: C09D 5/00, C08J 7/04, C08J 7/06

(54) **VERFAHREN ZUR HERSTELLUNG VON SELBSTREINIGENDEN, ABLÖSBAREN OBERFLÄCHEN**
METHOD OF PRODUCING SELF-CLEANING DETACHABLE SURFACES
PROCEDE DE REALISATION DE SURFACES AUTONETTOYANTES POUVANT ETRE RETIREES

(30) Priorität: 25.03.1999 DE 19913602
(43) Veröffentlichungstag der Anmeldung: 16.01.2002
(73) Patentinhaber: Barthlott, Wilhelm, 53115 Bonn (DE); Neinhuis, Christophe, 53117 Bonn (DE)
(72) Erfinder: Barthlott, Wilhelm, 53115 Bonn (DE); Neinhuis, Christophe, 53117 Bonn (DE)
(74) Vertreter: Werner, Hans-Karsten, Dr.Dipl.-Chem.
(86) Internationale Anmeldenummer: EP0002424
(87) Internationale Veröffentlichungsnummer: WO00058410

(56) Entgegenhaltungen:
- EP-A- 0 887 179
- WO-A-92/16309
- WO-A-96/04123
- CH-A- 268 258

## Beschreibung

Gegenstand der vorliegenden Erfindung ist ein Verfahren zur Herstellung von selbstreinigenden Oberflächen.

Die Reinigung der Oberflächen von Gegenständen hat erhebliche technische und wirtschaftliche Bedeutung, und zwar teilweise aus optischen und ästhetischen Gründen und teilweise aus technischen Gründen, insbesondere wenn es sich um lichtdurchlässige Oberflächen handelt, die zur Erhaltung ihrer Funktion von Zeit zu Zeit gereinigt werden müssen.

Es hat nicht an Versuchen gemangelt, technische Oberflächen zu schaffen, die schmutzabweisend und/oder selbstreinigend sind. Die Hersteller von Polymerfolien oder Polymerplatten haben versucht, dieses Problem zu lösen, indem sie möglichst glatte Oberflächen erzeugen und diese Oberflächen entweder extrem hydrophob oder extrem hydrophil gemacht haben. Beispiele hierfür sind Oberflächen aus dem extrem hydrophoben Teflon oder die extrem hydrophilen "No-drop-Beschichtungen", auf denen Wasser und Schmutz tropfenfrei ablaufen kann.

Die CH-PS-26 82 58 beschreibt wasserabstoßende Oberflächen, die mit Wasser einen Kontaktwinkel über 120° aufweisen. Sie werden Gewonnen durch Aufbringen von Pulvern wie Kaolin, Talkum, Ton oder Silikagel auf einer Unterlage, wobei das Pulver zuvor hydrophobiert wird durch organische Siliciumverbindungen. Die Aufbringung erfolgt zusammen mit härtbaren Harzen oder aus Lösungen mit organischen Lösungsmitteln. Dauerhaft hydrophobe Oberflächen sind so nicht herstellbar. Es finden sich auch keine Hinweise auf die Korngrößen oder Korngrößenverteilung der Pulver. Die Eigenschaften der so erhaltenen Oberflächen werden mit denen der Blätter der Kapuzinerkresse verglichen. Bei diesem Vergleich ist zu beachten, dass es dabei weder bekannt war noch technisch analysierbar war, worauf die Eigenschaften der Blattoberfläche von Kapuzinerkresse beruhen. Jetzt durchgeführte Untersuchungen haben ergeben, dass die Kapuzinerkresse eine extrem feine Ultrastruktur aufweist mit Strukturelementen kleiner als 2 µm.

Die US-P-3,354,022 beschreibt eine wasserabstoßende Oberfläche mit Erhöhungen und Vertiefungen und einem Luftgehalt von mindestens 60%, bei der sich ein Oberflächenkontaktwinkel von mehr als 90° einstellt.

Die DE-PS-10 23 217 beschreibt eine Form zum Herstellen von Formkörpern mit rauher Oberfläche. Die Form soll zur Herstellung von Formteilen aus Kautschuk oder Kunststoff mit rauher Oberfläche dienen. Dazu werden die Wandungen der Form überzogen mit grobem Korundpulver und einem Einbrennlack. Die Formen erzeugen Produkte mit gelegentlichen Vertiefungen und daher verbesserten Hafteigenschaften. Es wird sogar die übliche Vulkanisationshaut vermieden. Die so erhaltenen Oberflächen sind beispielsweise gut beschriftbar. Die Produkte sind somit sicherlich nicht mit bewegtem Wasser selbstreinigend.

Die JP-A-62-191447 beschreibt ein Verfahren, um die Wasserabstoßung einer Oberfläche zu erhöhen. Dazu wird ein Plasmapolymerfilm aufgetragen, dieser durch Ätzen angerauht und ein zweiter Plasmapolymerfilm aufgetragen.

Die JP-A-3-174279 (Abstract) beschreibt ein Verfahren zur Herstellung von matten, dekorativen Oberflächen auf Bögen oder Folien. Sie werden hergestellt durch Lacke, die mittels ionisierender Strahlen angehärtet und in welche in nicht spezifizierter Weise nicht näher spezifizierte Muster aufgeprägt werden. Sie werden dann durch weitere Bestrahlung völlig ausgehärtet.

Die eingehenden Untersuchungen des Anmelders haben zu dem überraschenden Ergebnis geführt, dass es technisch möglich ist, die Oberflächen von Gegenständen künstlich selbstreinigend zu machen, indem man sie künstlich mit einer Oberflächenstruktur aus Erhebungen und Vertiefungen versieht, wobei darauf zu achten ist, dass der Abstand zwischen den Erhebungen der Oberflächenstruktur im Bereich von 0,1 bis 200 µm, vorzugsweise 0,1 bis 100 µm und die Höhe der Erhebungen im Bereich von 0,1 bis 100 µm, vorzugsweise 0,1 bis 50 µm liegen, und wobei darauf zu achten ist, dass diese Erhebungen aus hydrophoben Polymeren oder haltbar hydrophobierten Materialien bestehen und darauf geachtet wird, dass die Erhebungen nicht durch Wasser oder durch Wasser mit Detergenzien ablösbar sind (vgl. WO 96/04123).

Aufgabe der vorliegenden Erfindung war es, ein Verfahren zur Herstellung von selbstreinigenden Oberflächen zu entwickeln, wobei diese mit Detergenzlösungen ablösbar sind. Gelöst wird die Aufgabe durch ein Verfahren mit den Merkmalen des Patentanspruchs 1.

Das erfindungsgemäße Verfahren zur Herstellung von selbstreinigenden Oberflächen, die Erhebungen und Vertiefungen aufweisen, wobei der Abstand zwischen den Erhebungen im Bereich von 0,1 bis 200 µm und die Höhe der Erhebungen im Bereich von 0,1 bis 100 µm liegt, beruht auf der Auftragung eines hydrophoben Materials, das beim Verdampfen des Lösungsmittels selbstorganisierend eine selbstreinigend Oberfläche bildet, auf einer Oberfläche und anschließender Trocknung, wobei das aufgetragene Material mit wässrigen Detergenzlösungen ablösbar ist. Das hydrophobe Material kann dabei in Form einer Lösung, Dispersion oder Emulsion vorliegen.

"Mit Detergenzien ablösbar" bedeutet, dass das aufgetragene Material durch Einwirkung von wässrigen Detergenzlösungen - zumindest bei längerfristiger Einwirkung - durch Auflösung zumindest von Teilen des aufgetragenen Materials abgelöst werden. Solche erfindungsgemäß aufgetragenen Materialien sind auch mechanisch ablösbar, beispielsweise durch Bürsten, Kratzen oder Hochdruckreinigung mit Wasser.

In einer Ausführungsform ist das hydrophobe Material ein Wachs, das selbstorganisierend eine mikrostrukturierte selbstreinigende Oberfläche bildet.

In einer anderen Ausführungsform enthält die Lösung, Dispersion oder Emulsion Festteilchen. Diese können selbst hydrophob oder hydrophil sein, wenn sie zusammen mit hydrophoben Materialien wie beispielsweise Wachsen eingesetzt werden.

Das Auftragen des hydrophoben Materials kann durch Aufsprühen, beispielsweise mittels einer Sprühdose oder einer Sprühpistole erfolgen. Je nach Art der geplanten Anwendung kann es vorteilhaft sein, dass das hydrophobe Material zusätzlich oleophob ist.

Es ist auch möglich, das hydrophobe Material durch Cotransport mit Wasser durch eine dampfdurchlässige Oberfläche zu transportieren.

Als hydrophobes Material eigenen sich im erfindungsgemäßen Verfahren insbesondere längerkettige sekundäre Alkohole und Alkandiole, β-Diketone, sekundäre Ketone und langkettige Alkane. Besonders geeignet sind Nonacosan-10-ol, Nonacosan-7,10-diol, Nonacosan-5,10-diol, Hentriacontan-12,14-dion, Hentriacontan-8,10-dion, Palmiton und andere hydrophobe Substanzen, die sich in flüchtigen Lösungsmitteln lösen und bei Verdampfen desselben durch Selbstorganisation eine hydrophobe wasserabstoßende Oberfläche bilden.

Technisch besonders bedeutungsvoll sind selbstreinigende Oberflächen von Gegenständen, die lichtdurchlässig sind und die aus optischen, ästhetischen oder technischen Gründen diese Lichtdurchlässigkeit für lange Zeit behalten sollen. Insbesondere handelt es sich dabei um lichtdurchlässige Verglasungen von Gebäuden, Fahrzeugen, Sonnenkollektoren etc. Die Ablösbarkeit des hydrophoben Materials ist insbesondere vorteilhaft, wenn die selbstreinigenden Eigenschaften nur vorübergehend benötigt werden, beispielsweise während der Lagerung oder eines Transportes, sonst jedoch - beispielsweise aus ästhetischen Gründen - unerwünscht sind.

Von wirtschaftlicher und technischer Bedeutung ist aber auch die Herstellung von selbstreinigenden Oberflächen bei Hausfassaden, Dächern, Denkmälern und Zelten sowie bei Innenbeschichtungen von Silos, Tanks oder Rohrleitungen, die entweder wässrige Lösungen enthalten oder leicht durch bewegtes Wasser rückstandsfrei gereinigt werden können. Von Interesse sind auch die Außenbeschichtungen von Fahrzeugen wie Autos, Zügen oder Flugzeugen.

Optimale Ergebnisse werden dann erzielt, wenn die Erhebungen der Oberflächenstrukturen dicht genug beisammenstehen, um eine Berührung der zwischen den Erhebungen liegenden Vertiefungen oder Absenkungen durch Wassertropfen zu vermeiden. Liegen die Erhebungen der Oberflächenstrukturen zu eng beieinander oder sind die Vertiefungen nicht tief genug, wirken sie wieder wie eine geschlossene Oberfläche und können dadurch besser benetzt werden. Es sollte daher angestrebt werden, daß mit zunehmendem Abstand der Erhebungen auch die Höhe der Erhebungen vom Untergrund zunehmen sollte. Die bisherigen Messungen haben ergeben, dass innerhalb der beanspruchten Grenzen für den Abstand und die Höhe der Erhebungen gute Ergebnisse erzielt werden. Optimale Ergebnisse liefern Oberflächen mit Erhebungen, die 0,1 bis 50 µm aufweisen und bei denen der Abstand zwischen den Erhebungen 0,1 bis 100 µm beträgt.

Die Erfindung wird durch die folgenden Beispiele erläutert.

### Beispiel 1:

Hentriacontan-14,16-dion wird als 0,1%ige Lösung in Hexan oder Ethylacetat wird mit Hilfe einer Spraydose oder einer Spritzpistole auf eine beliebige Oberfläche gesprüht. Während des Verdampfens des Lösungsmittels bildet das Hentriacontan-14,16-dion durch Selbstorganisation Kristalle in Form kleiner Röhrchen, die in ihrer Mehrzahl einen Durchmesser von 0,2 µm und eine Lange von 0,5-5 µm haben. Durch diese Beschichtung wird eine benetzbare Oberfläche hydrophob und der Kontaktwinkel erhöht sich auf bis zu 160°. Von derartigen Oberflächen werden kontaminierende Partikel durch bewegtes Wasser abgewaschen, wobei längerfristig auch die Beschichtung selber entfernt wird. Zur Erhöhung der Rauhigkeit der Beschichtung kann der Lösung ein hydrophiles (z.B. Quarzmehl) oder hydrophobes Pulver (z.B. Teflon) beigemischt werden.

### Beispiel 2:

Handelsüblicher Gips wird im Verhältnis 1:10:2 (Gewichtsprozent) mit Wasser und einem Silkonat (Wacker BS 15) gemischt und anschließend mit einem Pinsel oder einer Rolle aufgetragen. Beim Austrocknen bildet sich eine mikrorauhe Oberfläche, deren Struktur durch die nadelförmigen Kristalle des Gipses bestimmt wird. Diese sind nach dem Verdampfen des Wassers von einer Schicht des Hydrophobierungsmittels bedeckt. Die Kontaktwinkel auf einer derartigen Oberfläche betragen über 150°.

### Beispiel 3:

Handelsüblicher Gips wird im Verhältnis 1:10:0,5 (Gewichtsprozent) mit Wasser und einem Silkonat (Wacker Silkon WI) gemischt und anschließend mit einer Spritzpistole aufgetragen. Beim Austrocknen bildet sich eine mikrorauhe Oberfläche, deren Struktur durch die nadelförmigen Kristalle des Gipses bestimmt wird. Diese sind nach dem Verdampfen des Wassers von einer Schicht des Hydrophobierungsmittels bedeckt. Die Kontaktwinkel auf einer derartigen Oberfläche betragen über 150°.

### Beispiel 4:

Ein wasserdampfdurchlässiges Polymer (z.B. Polyurethan) wird auf einer Seite mit einer wachsartigen Substanz (z.B. Hentriacontan-14,16-dion) beschichtet, die sich durch die Fähigkeit zur Strukturbildung auszeichnet (siehe Beispiel 1). Lässt man Wasser durch das Polymer diffundieren, dann wird das Wachs cotransportiert und bildet auf der Oberfläche die gewünschten Mikrostrukturen.

Durch eine ausreichend große Menge Wachs lässt sich bei diesem System auch eine gewisse Nachhaltigkeit dahingehend erzielen, dass beschädige oder erodierte Strukturen für eine gewisse Zeit nachgebildet werden können.

## Patentansprüche

1. Verfahren zur Herstellung von selbstreinigenden Oberflächen, die Erhebungen und Vertiefungen aufweisen, wobei der Abstand zwischen den Erhebungen im Bereich von 0,1 bis 200 µm und die Höhe der Erhebungen im Bereich von 0,1 bis 100 µm liegt, indem eine Lösung, Dispersion oder Emulsion, die ein hydrophobes Material enthält, das beim Verdampfen des Lösungsmittels selbstorganisierend eine selbstreinigende Oberfläche bildet, aufgetragen und anschließend getrocknet wird, wobei das aufgetragene Material mit Detergenzien ablösbar ist.

2. Verfahren gemäß Anspruch 1, **dadurch gekennzeichnet, dass** das hydrophobe Material ein Wachs ist.

3. Verfahren gemäß Anspruch 1, **dadurch gekennzeichnet, dass** das hydrophobe Material wachsartige Substanzen sind.

4. Verfahren nach Anspruch 3, **dadurch gekennzeichnet, dass** die wachsartigen Substanzen primäre oder sekundäre Alkohole und Alkandiole, β-Diketone, sekundäre Ketone und langkettige Alkane sind.

5. Verfahren gemäß Anspruch 1, **dadurch gekennzeichnet, dass** die Lösung, Dispersion oder Emulsion Festteilchen enthält.

6. Verfahren gemäß mindestens einem der Ansprüche 1 bis 5, **dadurch gekennzeichnet, dass** das Auftragen der Lösung, Dispersion oder Emulsion durch Aufsprühen erfolgt.

7. Verfahren gemäß Anspruch 6, **dadurch gekennzeichnet, dass** das Auftragen mittels einer Sprühdose oder einer Sprühpistole erfolgt.

8. Verfahren gemäß mindestens einem der Ansprüche 1 bis 7, **dadurch gekennzeichnet, dass** das hydrophobe Material zusätzlich oleophob ist.

9. Gegenstand mit einer Oberfläche, die Erhebungen und Vertiefungen aufweist, wobei der Abstand zwischen den Erhebungen im Bereich von 0,1 bis 200 µm und die Höhe der Erhebungen im Bereich von 0,1 bis 100 µm liegt, wobei zumindest die Erhebungen hydrophob sind und die Erhebungen aus Festteilchen bestehen und die Oberfläche mit einem hydrophobem Material überzogen ist.

10. Verwendung von sekundären Alkoholen und Alkandiolen, β-Diketonen, sekundären Ketonen und langkettigen Alkanen als hydrophobes Material zur Herstellung von selbstreinigenden Oberflächen.

11. Verwendung gemäß Anspruch 10, **dadurch gekennzeichnet, dass** als hydrophobes Material Nonacosan-10-ol, Nonacosan-7,10-diol, Nonacosan-5,10-diol, Hentriacontan-12,14-dion, Hentriacontan-8,10-dion oder Palmiton verwendet werden.

## Claims

1. A method for the preparation of self-cleaning surfaces having protrusions and recesses, wherein the distance between said protrusions is in a range of from 0.1 to 200 µm and the height of said protrusions is in a range of from 0.1 to 100 µm, by applying a solution, dispersion or emulsion containing a hydrophobic material which forms a self-cleaning surface by self-organization when the solvent is evaporated, followed by drying, wherein the material applied can be removed with detergents.

2. The method according to claim 1, **characterized in that** said hydrophobic material is a wax.

3. The method according to claim 1, **characterized in that** said hydrophobic material is waxy substances.

4. The method according to claim 3, **characterized in that** said waxy substances are primary or secondary alcohols and alkanediols, β-diketones, secondary ketones and long-chain alkanes.

5. The method according to claim 1, **characterized in that** said solution, dispersion or emulsion contains solid particles.

6. The method according to at least one of claims 1 to 5, **characterized in that** said application of the solution, dispersion or emulsion is effected by spraying.

7. The method according to claim 6, **characterized in that** said application is effected using a spray can or spray gun.

8. The method according to at least one of claims 1 to 7, **characterized in that** said hydrophobic material is additionally oleophobic.

9. An object with a surface having protrusions and recesses, wherein the distance between said protrusions is in a range of from 0.1 to 200 µm and the height of said protrusions is in a range of from 0.1 to 100 µm, wherein at least the protrusions are hydrophobic, and the protrusions consist of solid particles, and the surface is coated with a hydrophobic material.

10. Use of secondary alcohols and alkanediols, β-diketones, secondary ketones and long-chain alkanes as a hydrophobic material for the preparation of self-cleaning surfaces.

11. The use according to claim 10, **characterized in that** nonacosane-10-ol, nonacosane-7,10-diol, nonacosane-5,10-diol, hentriacontane-12,14-dione, hentriacontane-8,10-dione or palmitone is used as said hydrophobic material.

## Revendications

1. Procédé de préparation de surfaces autonettoyantes qui présentent des bosses et des creux, l'intervalle entre les bosses étant compris dans la plage de 0,1 à 200 µm, et la hauteur des bosses étant comprise dans la plage de 0,1 à 100 µm, dans lequel on applique puis on sèche une solution, une dispersion ou une émulsion qui contient une matière hydrophobe qui forme une surface autonettoyante s'organisant automatiquement lors de l'évaporation du solvant, la matière appliquée pouvant être enlevée avec des détergents.

2. Procédé selon la revendication 1, **caractérisé en ce que** la matière hydrophobe est une cire.

3. Procédé selon la revendication 1, **caractérisé en ce que** la matière hydrophobe est formée de substances cireuses.

4. Procédé selon la revendication 3, **caractérisé en ce que** les substances cireuses sont des alcools primaires ou secondaires et des alcanediols, des β-dicétones, des cétones secondaires et des alcanes à chaîne longue.

5. Procédé selon la revendication 1, **caractérisé en ce que** la solution, la dispersion ou l'émulsion contient des particules solides.

6. Procédé selon au moins l'une des revendications 1 à 5, **caractérisé en ce qu'**on effectue l'application de la solution, de la dispersion ou de l'émulsion par pulvérisation.

7. Procédé selon la revendication 6, **caractérisé en ce qu'**on effectue l'application au moyen d'une bombe à aérosol ou d'un pistolet pulvérisateur.

8. Procédé selon au moins l'une des revendications 1 à 7, **caractérisé en ce que** la matière hydrophobe est, en outre, oléophobe.

9. Objet ayant une surface qui présente des bosses et des creux, l'intervalle entre les bosses étant compris dans la plage de 0,1 à 200 µm, et la hauteur des bosses étant comprise dans la plage de 0,1 à 100 µm, dans lequel au moins les bosses sont hydrophobes, et les bosses sont formées de particules solides, et la surface est revêtue d'une matière hydrophobe.

10. Utilisation d'alcools secondaires et d'alcanediols, de β-dicétones, de cétones secondaires et d'alcanes à chaîne longue en tant que matière hydrophobe pour la préparation de surfaces autonettoyantes.

11. Utilisation selon la revendication 10, **caractérisée en ce qu'**on utilise du nonacosane-10-ol, du nonacosane-7,10-diol, du nonacosane-5,10-diol, de l'hentriacontane-12,14-dione, de l'hentriacontane-8,10-dione ou de la palmitone en tant que matière hydrophobe.
